# EUROPEAN PATENT APPLICATION

(11) **EP 4 428 735 A1**
(43) Date of publication of application: **11.09.2024**
(21) Application number: 23160400.0
(22) Date of filing: 07.03.2023
(51) Int. Cl.: G06F 21/62, G05B 17/02, G05B 19/418, G06F 16/95, H04L 9/40

(54) **METHOD AND SYSTEM FOR OPERATING A DISTRIBUTED SIMULATION AND PROCESSING FRAMEWORK**

(71) Applicant: Siemens Aktiengesellschaft, 80333 München (DE)
(72) Inventor: WOLFRUM, Philipp Dr., 81539 München (DE); HELD, Harald Dr., 85461 Bockhorn (DE); HARTMANN, Dirk Dr., 85617 Aßling (DE); MAS, Peter, 69680 Chassieu (FR); BOZEK, Ewa Dr., 91052 Erlangen (DE); LOUKREZIS, Dimitrios Dr., 80809 München (DE); PFEIFFER, Bernd-Markus Dr., 91080 Uttenreuth (DE); BUSSE, Corinna, 90592 Schwarzenbruck (DE); HÖHLEIN, Nicolai, 90409 Nürnberg (DE); FRIEDRICH, Michael, 60385 Frankfurt (DE); CHOISELAT, Leo, 69009 Lyon (FR); SCHENK, Tim, 84034 Lanshut (DE)
(74) Representative: Siemens Patent Attorneys

(57) **Abstract**

For operating a distributed simulation and processing framework, a trust relationship (T) between a simulation server (SIS) and a processing client (CL) is set up, wherein individual access to individual simulation operations (S1, S2) is to be individually authorized via the trust relationship (T). The processing client (CL) is coupled to the simulation server (SIS) via a web interface (WI). Furthermore, a process sequence (G) is read from a user interface (UI) of the processing client (CL), and simulation operations (S1, S2) and a processing operation (P1, P2) are extracted from the process sequence (G). Then, for each of the extracted simulation operations (S1, S2) an individual request (R) for executing the respective simulation operation is sent from the processing client (CL) to the simulation server (SIS), which checks on an operation-individual basis, whether the processing client (CL) is authorized to activate the respective simulation operation (S1, S2), and in case the check is positive, the respective simulation operation (S1, S2) is executed by the simulation server (SIS) and a respective simulation result (SR1, SR2) is sent to the processing client (CL). The processing client (CL) then executes the extracted processing operation (P1, P2) with the received simulation results (SR1, SR2) as input data. Finally, a processing result (PR) of the processing operation (P1, P2) is output for controlling a process or a machine (M).

## Description

Complex machines like motors, robots, power plants, production plants, turbines, combustion engines, power grids, machining tools, chemical processing plants, or vehicles often require sophisticated control or monitoring strategies in order to operate the machine in a productive and stable operating range and to predict possible malfunctions. For implementing such control or monitoring strategies, contemporary machine controllers often use a numerical simulator for simulating dynamic state and behavior of a respective machine during runtime. Here, the concurrent simulation is often continuously fed with sensor data and other operational data of the running machine. With that, the concurrent simulation may deduce a current or future state, e.g., a temperature, a pressure and/or a load of the running machine even at places which are not equipped with specific sensors. This information usually allows a very effective and anticipatory monitoring and control of the machine. Such a runtime simulation of a machine is often denoted as digital twin of the machine.

Furthermore, simulations of are often used to optimize new products, their fabrication, or other industrial processes.

However, the development of accurate simulations models often requires much effort. Hence, there is some interest to protect elaborated simulation models against unauthorized distribution and/or to control the usage of them.

In general, an access to digital content may be restricted by some form of digital rights management (DRM). In case of simulation models and when multiple users want to work with them in multiple environments, these restrictions can easily be a significant obstacle.

A typical way of exchanging simulation models is exporting them as so-called functional mock-up units (FMUs). However, while an exported FMU can be passed on to anyone, at runtime that FMU will only work if it can contact a license server with a valid license. If, on the other hand, the usage of the FMU was not restricted by such an online license check, it can, once handed out, be passed on to arbitrarily many additional users without the owner retaining any control of the usage.

It is an object of the present invention to provide a method and a system for operating a simulation and processing framework, that allow for a more flexible usage of simulation models and/or for a better control of that usage.

This object is achieved by a method according to patent claim 1, a system according to patent claim 13, a computer program product according to patent claim 14, and a computer readable storage medium according to patent claim 15.

For operating a distributed simulation and processing framework, a trust relationship between a simulation server providing simulation operations of a simulation model, and a processing client providing processing operations is set up, wherein individual access to individual simulation operations is to be individually authorized via the trust relationship. The processing client is coupled to the simulation server via a web interface. Furthermore, a process sequence is read from a user interface of the processing client, and simulation operations and a processing operation are extracted from the process sequence. Then, for each of the extracted simulation operations
- an individual request for executing the respective simulation operation is sent from the processing client to the simulation server via the web interface,
- the simulation server checks on an operation-individual basis, whether the processing client is authorized to activate the respective simulation operation, and
- in case the check is positive, the respective simulation operation is executed by the simulation server and a respective simulation result is sent via the web interface to the processing client.

The processing client then executes the extracted processing operation with the received simulation results as input data. Finally, a processing result of the processing operation is output for controlling a process or a machine.

For performing the inventive method, a system, a computer program product, and a non-transient computer readable storage medium are provided.

The inventive method and/or the inventive system may be implemented by means of one or more processors, computers, application specific integrated circuits (ASIC), digital signal processors (DSP), programmable logic controllers (PLC), and/or field-programmable gate arrays (FPGA). Moreover, the inventive method may be executed in a cloud and/or in an edge computing environment.

The invention allows for an efficient control and monitoring of the usage of a simulation model. In particular, a creator or owner of the simulation model may control by means of the simulation server who can use the simulation model and how it is used. In particular, the creator or owner may grant, extend, reduce, or revoke an access to the simulation model. Furthermore, the simulation model can be shared with many users without losing control.

A user of the processing client, on the other hand, may use various simulation models via the web without the need to write model-specific code by himself. In particular, the simulation capabilities of a simulation server may be provided and used in a platform-independent way. In a sense, the simulation may be regarded as a web service. In this way, several simulation models may be combined on the client side into an overarching simulation model or workflow.

Particular embodiments of the invention are specified by the dependent claims.

According to an advantageous embodiment of the invention, an individual access to simulation model data stored in the simulation server may be individually authorized via the trust relationship. In this way, the access to simulation model data may be individually controlled and protected against unauthorized access.

According to a further embodiment of the invention, an access to the simulation results received by the processing client may be authorized via the trust relationship. In this way, the simulation results may be protected against unauthorized access, in particular on the client side.

According to a further embodiment of the invention, it may be checked, in particular via the trust relationship, whether the processing client is authorized to execute the extracted processing operation. In case the check is negative, the execution of the extracted processing operation may be prevented. This allows for a fine-grained control of a processing of the simulation results on the client side.

According to a further embodiment of the invention, the requested simulation operations may be tracked by the simulation server. This allows to monitor how the simulation model is used and/or who uses the simulation model.

According to a further embodiment of the invention, first sensor data of the running process or the running machine may be continuously captured by the processing client. The first sensor data may be sent with the simulation requests to the simulation server and may be input to one of the executed simulation operations, thus continuously updating the simulation to continuously simulate an operational behavior of the running process or the running machine. The first sensor data may be processed before being sent to the simulation server. The running process or the running machine may then be continuously controlled by means of the processing result. In this way, a digital twin of the running process or the running machine may be implemented, which allows to infer a current or future state of the process or the machine from its simulation. Advantageously, the invention allows to provide only specific simulation results while sensitive structural details of the process or machine may be hidden from the user of the processing client.

According to a further embodiment of the invention, second sensor data of the running process or the running machine may be captured by the processing client. The extracted processing operation may then determine a deviation between the second sensor data and the received simulation results. Depending on the deviation, the simulation model and/or its parameters may be adapted in such a way that the deviation is reduced. In particular, the second sensor data and/or the simulation results may by processed before the deviation may be determined between the processed second sensor data and/or the processed simulation results. In that way the simulation model may be calibrated with regard to the characteristics of the running process or running machine.

According to a further embodiment of the invention, a surrogate model may be operated by the processing client. Furthermore, the extracted processing operation may determine a deviation between the received simulation results and output signals of the surrogate model. Depending on the deviation, the surrogate model may be adapted in such a way that the deviation is reduced. This allows to train a surrogate model, e.g., an artificial neural network or another machine learning model, by the simulation results. If the deviation between the simulation results and the results of the surrogate model is sufficiently small, the surrogate model may replace a detailed simulation.

According to a further embodiment of the invention, a querying operation denoting a simulation model parameter may be extracted from the process sequence and may be sent to the simulation server via the web interface. The simulation model parameter may be denoted by a specific identifier. The simulation server may then check via the trust relationship whether the processing client is authorized to query that simulation model parameter. In case the check is positive, a value of the simulation model parameter may be sent from the simulation server via the web interface to the processing client. Such querying operations allow to query, under the individual control of the simulation server, capabilities, properties, or requirements of the simulation model, e.g., available input or output variables, setting parameters, or model derivatives.

In an analogous way, a setting operation denoting a simulation model parameter and specifying a value for it may be extracted from the process sequence and may be sent to the simulation server via the web interface. The simulation server may then check via the trust relationship whether the processing client is authorized to set that simulation model parameter. In case the check is positive, the simulation model parameter may be set to the specified value.

Furthermore, a set-up operation specifying a simulation service may be extracted from the process sequence and may be sent to the simulation server via the web interface. The simulation server may then check via the trust relationship whether the processing client is authorized to set up that simulation service. In case the check is positive, the simulation service may be set up on the simulation server. The simulation service may be a part, a capability, or a routine of the simulation model or may be a new simulation model. This allows a creator or owner of a simulation model to extend an existing simulation model or to upload a new simulation model or new simulation data to the simulation server in an easy and uniform way.

According to a further embodiment of the invention the process sequence may be specified by a data structure in the form of a graph comprising nodes and edges. In particular, the graph may be a directed graph. A respective node may store a simulation operation, a processing operation or a simulation parameter. In particular, a node may store a simulation service or a reference to it. Furthermore, a respective edge between a first node and a second node may specify a data transfer between the first node and the second node. By means of directed graphs a great variety of computational processes can be represented in a machine-readable and unified way.

Particular embodiments of the invention are described in the following paragraphs with reference to the figures. The figures illustrate in schematic representation:
- Figure 1:: a system for operating a distributed simulation and processing framework and
- Figure 2:: a screenshot of a user interface for defining a process sequence.

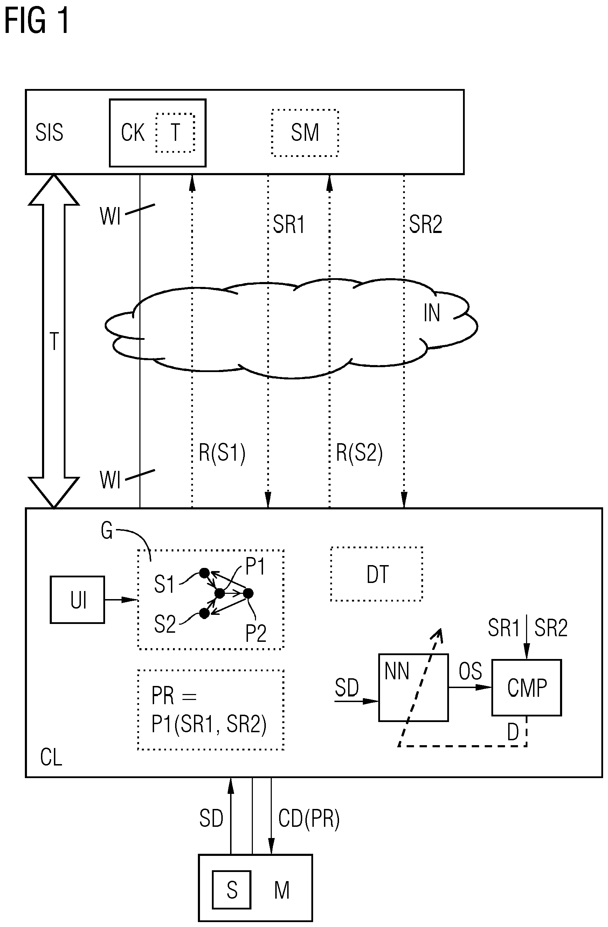

Figure 1 shows a system for operating a distributed simulation and processing framework in schematic representation. The framework is used for efficiently controlling a running machine M, which may be a motor, a robot, a turbine, a production plant, a combustion engine, a power grid, a machining tool, a vehicle, a chemical processing plant, or another technical system. Alternatively or additionally, the framework may be used to control a process, e.g., a fabrication process, a logistic process, a chemical process, or another industrial process. Moreover, the framework may be used for optimizing a design of a product. In the present embodiment it is assumed that the machine M is an electric drive.

The framework comprises a processing client CL for controlling the machine M, and comprises a simulation server SIS for simulating a dynamic state or behavior of the machine M by means of a simulation model SM of the machine M.

Typically, the simulation server SIS is operated or supervised by a creator or owner of the simulation model SM. In the present embodiment, the creator or owner offers his simulation model SM as a web service. For this purpose, the creator or owner packages code for executing and querying the simulation model SM preferably into a stand-alone executable and uploads this executable to the simulation server SIS. The executable then runs as a web service on the simulation server SIS and can be accessed online via a well-defined API (Application Programing Interface). However, the web service is not directly accessible to users. Rather, the web service can only be used via an authorized processing client, here CL.

In the present embodiment, the processing client CL is operated by a user of the machine M. If the creator or owner of the simulation model SM is different from the user of the machine M, the processing client CL and the simulation server SIS typically run on different and/or separated computers.

Before the processing client CL and the simulation server SIS start to interwork, a trust relationship T between the simulation server SIS and the processing client CL is set up. The trust relationship T allows both, the simulation server SIS and the processing client CL, to securely authenticate each other. Furthermore, the trust relationship T allows to securely authorize each individual access by the processing client CL to the simulation model SM, to simulation operations of that simulation model SM, to simulation model data, to simulation results, to querying operations, to setting operations, and to set-up operations. Optionally, the trust relationship T may be also used to restrict, to prevent, or to control an execution of individual processing operations by the processing client CL.

The trust relationship T may be implemented by means of an exchange of keys or other credentials, or by means of hardware tokens, PKI cards, or other security tokens. Apparently, there are many known methods to set up such a trust relationship.

For the authentication of processing clients, here CL, and for authorizing individual accesses of processing clients, the simulation server SIS comprises a checking unit CK. The latter is configured to authenticate processing clients by means of the trust relationship T, e.g., by exchanging and checking corresponding key data. The checking unit CK operates a list of roles, each allocated to a processing client. A respective role specifies which of the above accesses are currently allowed, restricted, or denied. If the processing client CL requests such an individual access, the checking unit CK authenticates the processing client CL and determines a role allocated to the authenticated processing client CL. If the requested access is currently allowed by the allocated role, the checking unit CK grants the requested access.

In order to control the machine M, the processing client CL is coupled to the machine M, which continuously transmits sensor data SD from sensors S of the running machine M to the processing client CL. The sensor data SD may specify, e.g., a temperature, a pressure, a resource consumption, a torque, or other physical quantities of the running machine M. Depending on the sensor data SD, the processing client requests a simulation of a behavior of the machine M from the simulation server SIS and receives corresponding simulation results from the simulation server SIS. For requesting the simulation and receiving the simulation results, the processing client CL couples to the simulation server SIS via a secured, e.g., encrypted web interface WI. According to the present embodiment, the simulation server SIS and the processing client CL are coupled over the internet IN. A detailed description of the interworking between the processing client CL and the simulation server SIS is given below.

The simulation results are used to derive control data CD for an optimized control of the running machine M. The control data CD are then transmitted form the processing client CL to the machine M, where they are used to control the running machine M.

In order to define and to set up a simulation and processing workflow for controlling the machine M, the processing client CL comprises a user interface UI. The latter allows a user of the processing client CL to input a processing sequence in the form of a directed graph G specifying the simulation and processing workflow, i.e., a sequence of simulation actions and processing actions. The graph G comprises several nodes each storing a simulation operation or a processing operation, possibly together with one or more further parameters, or training data that can be set by the user and that are relevant for the respective operation.

The simulation operations each specify a simulation operation offered by the simulation server SIS, e.g., a specific simulation routine for simulating a thermal or mechanical behavior of the machine M. The corresponding node may then identify a respective simulation model, the respective simulation routine, a respective simulation dataset, training data, one or more physical parameters of the simulation, a respective simulation constraint and/or other simulation parameters.

The processing operations, on the other hand, each specify a handling of data which are relevant for controlling the machine M or for simulating it, e.g., a capture or processing of sensor data, a processing of input or output data of a simulation, an optimization routine, a training of a machine learning model, a calculation of model derivatives, or a generation of control data for controlling the machine M.

The process sequence G may further comprise nodes for storing querying operations, setting operations and/or set-up operations, which were already described above.

Within the graph G, the nodes are connected by directed edges each representing a data transfer between the respective connected nodes. A respective edge directed from a first node specifying a first operation to a second node specifying a second operation particularly specifies a data transfer from an output of the first operation to an input of the second operation.

For the present embodiment, it is assumed that the processing sequence G comprises simulation operations S1 and S2 to be executed by the simulation server SIS, and processing operations P1 and P2 to be executed by the processing client CL. As indicated by the edges depicted in figure 1, the simulation operations S1 and S2 should both feed their output into the processing operation P1. Furthermore, the processing operation P1 should feed its resulting output into the processing operation P2, which in turn should feed its resulting output into the simulation operations S1 and S2. Here, the simulation operation S1 may be a simulation of a thermal behavior of the machine M whereas the simulation operation S2 may be a simulation of a mechanical behavior. The processing operation P1 may then combine the simulated results to calculate an overall performance or strain of the machine M. Furthermore, the processing operation P2 may be an optimization routine which varies one or more input parameters of the simulations in order to optimize the simulated performance or strain.

In order to execute the process sequence G, the processing client CL extracts the simulation operations S1 and S2 as well as the processing operations P1 and P2 from the process sequence G.

For executing the simulation operation S1, the processing client CL sends a request R(S1) identifying the extracted simulation operation S1 via the web interface WI to the simulation server SIS. The request R(S1) further comprises simulation parameters for the simulation operation S1. Moreover, the request R(S1) may further comprise the possibly processed sensor data SD.

Within the simulation server SIS, the checking unit CK checks, relying on the trust relationship T, the individual request R(S1). In particular, the checking unit CK checks whether the processing client CL is currently authorized to execute the individual simulation operation S1 as requested. In case the check is positive, i.e., the processing client CL is actually authorized, the checking unit CK enables the execution of the simulation operation S1 as requested. Otherwise, the individual request R(S1) is denied.

If the execution is enabled, the simulation server SIS executes the simulation operation S1 as requested and sends a respective simulation result SR1 to the processing client CL. For the present embodiment it is assumed that the simulation result SR1 specifies a temperature within the machine M.

The above procedure is carried out for all other simulation operations, here only S2, from the process sequence G. I.e., the processing client CL sends a request R(S2) identifying the extracted simulation operation S2 to the simulation server SIS and receives, if the operation-individual check by the checking unit CK is positive, a respective simulation result SR2 from the simulation server SIS as described above. For the present embodiment it is assumed that the simulation result SR2 specifies a torque or load within the machine M.

As specified by the edges of the graph G, the simulation results SR1 and SR2 are both input to the extracted processing operation P1. The latter is executed by the processing client CL and yields a processing result PR. For the present embodiment it is assumed that the processing result PR specifies an overall strain of the machine M. The processing result PR is then input to the extracted processing operation P2, which varies simulation parameters of the simulation operations S1 and S2 and triggers new requests for executing these operations with the varied simulation parameters on the simulation server SIS. The simulation parameters are varied in order to minimize the simulated overall strain. For such a minimization, many efficient optimization methods are known.

The optimized simulation parameters and the corresponding processing result PR are used to derive control data CD for controlling the machine M. The control data CD are then transmitted form the processing client CL to the machine M, where they are used to control the running machine M. A specific process for deriving the control data CD from the simulation parameters and the processing result PR may be specified by an additional specific node in the process sequence G.

The simulation results may be further used to operate a digital twin of the machine M. The digital twin is a concurrent simulation of the running machine M, continuously supplied with sensor data, here SD, of the running machine M and continuously simulating its operational behavior based on the sensor data SD.

For implementing the digital twin, the sensor data SD of the running machine M are continuously captured by the processing client CL. The possibly processed sensor data SD are sent with simulation requests R to the simulation server SIS and are input to appropriate simulation operations, thus continuously updating the simulation to continuously simulate an operational behavior of the running machine M. The running machine M may then be continuously controlled by means of the corresponding processing results.

The simulation results may further be used to train a surrogate model NN, which may be used as an efficient replacement for a detailed simulation. The surrogate model NN may be implemented as an artificial neural network or as another machine learning model within the processing client CL. In order to train the surrogate model NN, a great number of simulation operations are requested from the simulation server SIS by the processing client CL.

In the present embodiment, the surrogate model NN should be trained to reproduce simulation results, here SR1, and SR2, of the simulation server SIS from given sensor data SD. For this purpose, the possibly processed sensor data SD are input to the surrogate model NN, which derives a resulting output signal OS from the sensor data SD. Furthermore, corresponding simulations based on the sensor data SD are requested from the simulation server SIS and corresponding simulation results are received by the processing client CL. The simulation results corresponding to the respective sensor data SD are then compared with the corresponding output signal OS by a comparator CMP. The comparator CMP determines an average deviation D between the sensor data SD and the corresponding simulation results. The deviation D is then fed back to the surrogate model NN, where neural weights or other parameters of the surrogate model NN are adjusted in such a way that the deviation D is minimized. For such a training, many efficient optimization methods are known.

A specific process for training the surrogate model NN by means of simulation results may be specified by an additional specific node in the process sequence G.

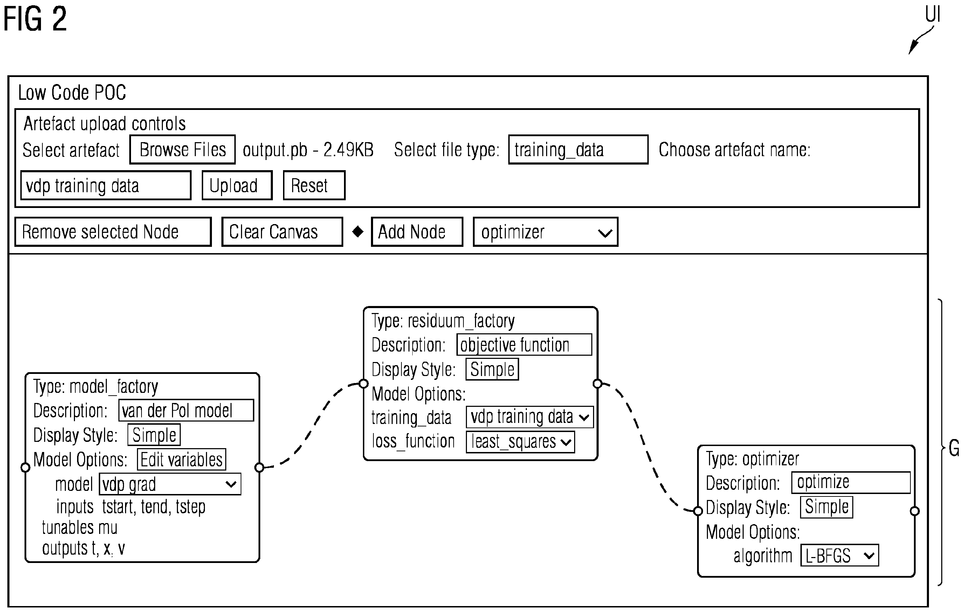

Figure 2 shows a screenshot of an exemplary user interface UI during defining a process sequence G for calibrating a model parameter "mu" of a simulation model of the simulation server SIS.

In the depicted case, a so-called van der Pol model specified as "vdp_grad" was selected by the user of the processing client CL as simulation model. The simulation model is represented as a node in the process sequence G, where the node is designated as "model_factory". The model parameter "mu" to be determined was also set by the user as a parameter of the simulation model node.

Given measurement data, e.g., the sensor data SD, in form of input-output pairs, and the selected simulation model, the model parameter "mu" should be determined in such a way that the simulation model produces results that are as close as possible to the measurement data. The calibration process for the model parameter should be mapped onto the process sequence G.

In addition to the simulation model, an objective function was selected by the user and is represented as a further node in the graph G. The objective function calculates the quantity to be optimized by the calibration. Such a quantity is often denoted as residuum. Accordingly, the node of the objective function is designated as "residuum_factory" in the process sequence G. In the present case the objective function was chosen by the user to be a sum of squared differences of the simulation results and the measurement data.

As the objective function evaluates the simulation results, an output of the simulation model node is connected to an input of the objective function node. Furthermore, the user has selected measurement data from a set of training data denoted as "vdp_training_data" to be compared with the simulation results. With that, executing the objective function node results in a residuum service whose address is passed on to connected nodes of the process sequence G.

By means of the connected simulation model node, simulation operations of the simulation model can be executed, and simulation model data of the simulation model can be accessed via suitable API calls. The preceding simulation services are dynamically spun up and cannot be reached from outside of the simulation and processing framework.

In order to determine an optimized value for the model parameter "mu", the user has further connected the objective function node to an optimization node of the graph G. That way, when executing the process sequence G, the optimization node gets passed the address of the residuum service comprising the objective function to be minimized. Within the optimization node, the user has selected a so-called L-BFGS algorithm (L-BFGS: Limited-memory Broyden-Fletcher-Goldfarb-Shanno) for minimizing the objective function as set within the objective function none.

By execution of the process sequence G, the optimizer determines a value for the model parameter "mu" which minimizes the objective function as defined by the objective function node. This optimized value of the model parameter "mu" can be used to calibrate the simulation model as desired.

Apart from defining process sequences, the user interface UI further allows a creator or owner of a simulation model to upload a simulation model, parts of a simulation model, or simulation data to the simulation server SIS.

## Claims

1. A computer-implemented method for operating a distributed simulation and processing framework, comprising:
a) setting up a trust relationship (T) between a simulation server (SIS) providing simulation operations (S1, S2) of a simulation model (SM), and a processing client (CL) providing processing operations (P1, P2), wherein individual access to individual simulation operations (S1, S2) is to be individually authorized via the trust relationship (T),
b) coupling the processing client (CL) to the simulation server (SIS) via a web interface (WI),
c) reading a process sequence (G) from a user interface (UI) of the processing client (CL),
d) extracting from the process sequence (G) simulation operations (S1, S2) and a processing operation (P1, P2),
e) for each of the extracted simulation operations (S1, S2)
- sending an individual request (R) for executing the respective simulation operation (S1, S2) from the processing client (CL) to the simulation server (SIS) via the web interface (WI),
- checking by the simulation server (SIS) on an operation-individual basis, whether the processing client (CL) is authorized to activate the respective simulation operation (S1, S2), and
- in case the check is positive, executing the respective simulation operation (S1, S2) by the simulation server (SIS) and sending a respective simulation result (SR1, SR2) via the web interface (WI) to the processing client (CL),
f) executing by the processing client (CL), the extracted processing operation (P1, P2) with the received simulation results (SR1, SR2) as input data, and
g) outputting a processing result (PR) of the processing operation (P1, P2) for controlling a process or a machine (M).

2. Method according to claim 1, wherein
individual access to simulation model data stored in the simulation server (SIS) is individually authorized via the trust relationship (T).

3. Method according to one of the preceding claims, wherein access to the simulation results (SR1, SR2) received by the processing client (CL) is authorized via the trust relationship (T).

4. Method according to one of the preceding claims, wherein it is checked whether the processing client (CL) is authorized to execute the extracted processing operation (P1, P2), and
in case the check is negative, the execution of the extracted processing operation (P1, P2) is prevented.

5. Method according to one of the preceding claims, wherein the requested simulation operations (S1, S2) are tracked by the simulation server (SIS).

6. Method according to one of the preceding claims, wherein first sensor data (SD) of the running process or the running machine (M) are continuously captured by the processing client (CL),
the first sensor data (SD) are sent with the simulation requests (R) to the simulation server (SIS) and are input to one of the executed simulation operations (S1, S2), thus continuously updating the simulation to continuously simulate an operational behavior of the running process or the running machine (M), and
the running process or the running machine (M) is continuously controlled by means of the processing result (PR).

7. Method according to one of the preceding claims, wherein second sensor data of the running process or the running machine (M) are captured by the processing client (CL),
the extracted processing operation (P1, P2) determines a deviation between the second sensor data and the received simulation results (SR1, SR2), and
depending on the deviation, the simulation model (SM) is adapted in such a way that the deviation is reduced.

8. Method according to one of the preceding claims, wherein
a surrogate model (NN) is operated by the processing client (CL),
the extracted processing operation (P1, P2) determines a deviation (D) between the received simulation results (SR1, SR2) and output signals (OS) of the surrogate model (NN), and depending on the deviation (D), the surrogate model (NN) is adapted in such a way that the deviation (D) is reduced.

9. Method according to one of the preceding claims, wherein
a querying operation denoting a simulation model parameter is extracted from the process sequence (G),
the querying operation is sent to the simulation server (SIS) via the web interface (W),
the simulation server (SIS) checks via the trust relationship (T) whether the processing client (CL) is authorized to query that simulation model parameter, and
in case the check is positive, a value of the simulation model parameter is sent from the simulation server (SIS) via the web interface (WI) to the processing client (CL).

10. Method according to one of the preceding claims, wherein
a setting operation denoting a simulation model parameter and specifying a value for it is extracted from the process sequence (G),
the setting operation is sent to the simulation server (SIS) via the web interface (WI),
the simulation server (SIS) checks via the trust relationship (T) whether the processing client (CL) is authorized to set that simulation model parameter, and
in case the check is positive, the simulation model parameter is set to the specified value.

11. Method according to one of the preceding claims, wherein a set-up operation specifying a simulation service is extracted from the process sequence (G),
the set-up operation is sent to the simulation server (SIS) via the web interface (WI),
the simulation server (SIS) checks via the trust relationship (T) whether the processing client (CL) is authorized to set up that simulation service, and
in case the check is positive, the simulation service is set up on the simulation server (SIS).

12. Method according to one of the preceding claims, wherein the process sequence is specified by a data structure in the form of a graph (G) comprising nodes and edges, wherein a respective node stores a simulation operation (S1, S2), a processing operation (P1, P2) or a simulation parameter, and a respective edge between a first node and a second node specifies a data transfer between the first node and the second node.

13. A system for operating a distributed simulation and processing framework, comprising means for carrying out a method according to one of the preceding claims.

14. A computer program product for operating a distributed simulation and processing framework, comprising instructions which, when executed by computers, cause the computers to carry out a method according to one of the claims 1 to 12.

15. A non-transient computer readable storage medium storing a computer program product according to claim 14.
